# EUROPEAN PATENT SPECIFICATION

(11) **EP 1 645 496 B1**
(45) Date of publication and mention of the grant of the patent: **01.05.2013**
(21) Application number: 05380209.6
(22) Date of filing: 29.09.2005
(51) Int. Cl.: B62J 27/00, B62J 35/00

(54) **Securing device for the pillion passenger of a motorbike**
Sicherheitseinrichtung für den Soziusfahrer auf dem Motorrad
Dispositif auxiliaire de sécurité pour passagers de motocyclette

(30) Priority: 11.10.2004 ES 200402420
(43) Date of publication of application: 12.04.2006
(73) Proprietor: Ruiz Martin, José Antonio, 08830 Saint boi de Llobregat (Barcelona) (ES)
(72) Inventor: Ruiz Martin, José Antonio, 08830 Saint boi de Llobregat (Barcelona) (ES)
(74) Representative: Durán Moya, Carlos

(56) References cited:
- EP-A2- 1 410 983
- WO-A1-2004/026675
- CA-A1- 2 419 169
- FR-A1- 2 626 545

## Description

The present invention relates to a securing device for the pillion passenger of a motorbike, in accordance with claim 1.

The securing device according to the present invention is especially applicable to motorbikes which have an upper chassis member between the handlebars and the rider's seat. Customarily, said chassis member carries the fuel tank. Said type of tank is customarily termed top tank.

The securing devices for the pillion passenger of a motorbike known hitherto comprise handholds located in the immediate vicinity of the area where the pillion passenger sits, or the rear seat.

Said devices have a plurality of drawbacks. Firstly, the pillion passenger remains upright when holding on and, owing to the position in which he finds himself, the pillion passenger thus secured is very susceptible to the inertial forces which are generated during acceleration, deceleration and abrupt changes of direction. As a result, the pillion passenger must grip on tightly, thereby leading to tiredness and a feeling of discomfort. This is dangerous, since the pillion passenger, owing to tiredness and discomfort, tends to reduce too much the gripping pressure on the handhold or to hold on to the rider's body, or even rest his hands directly on the lateral part of the tank, which do not constitute safe securing points. Both reactions are potentially very dangerous, being capable of resulting in accidents.

These drawbacks are even more acute in the case of motorbikes which imitate the style of racing motorbikes, on which the rear seat is becoming ever higher. With this configuration the centre of gravity of the pillion passenger is becoming ever higher and he is therefore subject to a greater degree to the effect of the inertial forces mentioned previously.

CA 2419169 A1 discloses securing device according to the preamble of claim 1, wherein the handhold regions for the pillion passenger's hands are arranged perpendicular to the simmetry plane of the motorbike. Although said securing device is an improvement over the aforesaid security device, it could be desirable to obtain a securing device more confortable for the pillion passenger and less exposed to the inertial forces.

It is an aim of the present invention to disclose a securing device which is more ergonomic and presents a greater degree of comfort for the pillion passenger.

Another aim of the present invention is to disclose a securing device by means of which the pillion passenger is rendered less susceptible to the inertial forces mentioned previously.

A further aim of the present invention is to disclose a securing device which is capable of being fitted easily and economically in the form of an accessory for motorbikes currently on the market.

A further aim of the present invention is to disclose a securing device the embodiments of which can be fitted at the same time to different models of motorbike made by the same manufacturer.

Said aims are achieved according to the present invention by means of a securing device for the pillion passenger comprising two handhold regions for the hands of the pillion passenger, which are located on the upper surface of the upper chassis member located between the handlebars of the motorbike and the rider's seat area, the handhold regions being arranged substantially obliquely so that the pillion passenger's hands form an angle having its vertex between the device and the pillion passenger's body.

Preferably, handhold regions are arranged one on each side of the notional transverse median plane of the motorbike and in proximity thereto. By means of this preferred characteristic, an even more comfortable position and securing is obtained for the pillion passenger.

More preferably, the handhold regions are ergonomically adapted to receive the pillion passenger's hands.

Preferably, the device is placed substantially horizontally on the motorbike. For the purposes of the present invention, the angle formed with the horizontal by the seats of the rider and the pillion passenger should also be understood to be substantially horizontal.

Preferably, both handhold regions will have a member for connection to a structural member of the motorbike.

In cases where the upper chassis member located between the handlebars and the rider's seat carries a fuel tank, the device may be incorporated in the frame of the tank upper cover.

Also in these cases, the securing device may be in the form of an accessory which is placed on the upper cover of the tank of the motorbike, by means of a member provided with drilled holes, using for their connection the actual holes for screwing on the frame of the tank upper cover.

In other embodiments of the present invention, the handhold regions may be incorporated directly in the aforesaid upper chassis member of the motorbike.

For greater understanding thereof, some drawings of a preferred embodiment of the present invention are appended hereto by way of non-limiting example.

Figure 1 is a perspective view which shows the fitting of a device for securing the pillion passenger according to the present invention, in the form of an accessory which is screwed on to the frame of the upper cover of a motorbike with top tank.

Figure 2 shows a plan view of the device according to the present invention shown in Figure 1.

Figure 3 is a view in front elevation of the embodiment shown in Figures 1 and 2.

Figure 4 is a view in side elevation of the embodiment shown in Figures 1, 2 and 3.

Figure 5 is a perspective view which shows another different embodiment of the securing device according to the present invention. In this embodiment the device is shown incorporated in the upper cover of the top tank of the motorbike. It is also possible to see how the pillion passenger's hands fit on to the securing device.

Figure 6 shows a plan view of another different embodiment of the securing device incorporated with the frame and upper cover of the tank of the motorbike.

Figure 7 shows a plan view of yet another embodiment of the securing device according to the present invention in the form of an accessory for mounting on the frame of the tank upper cover and which has ergonomic regions for the hands to fit on.

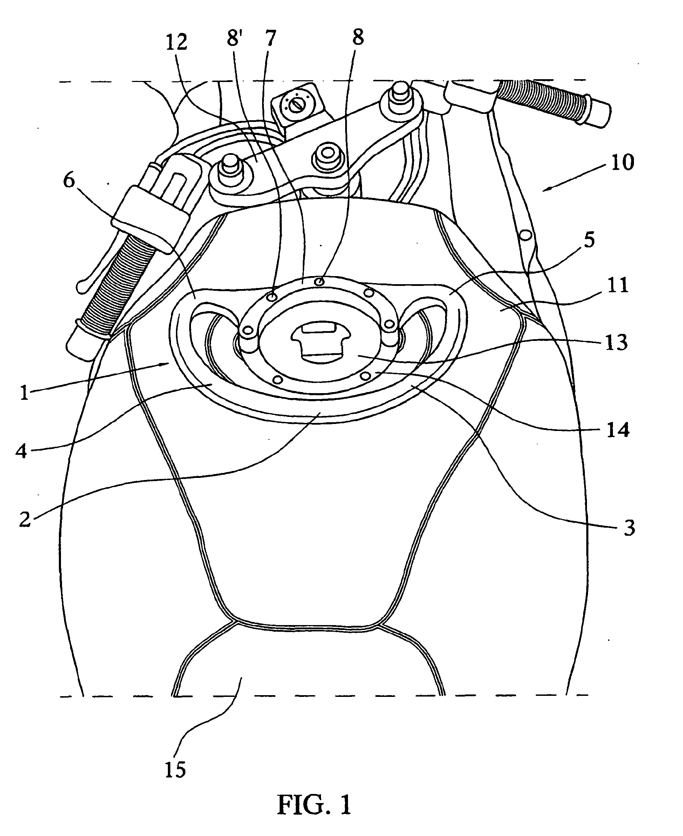

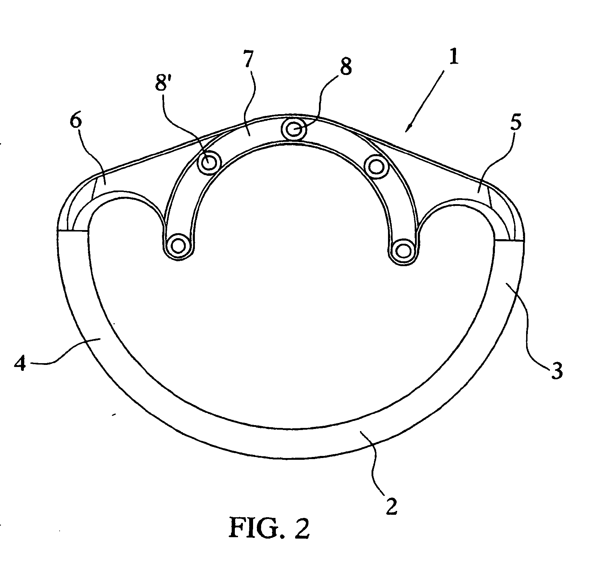

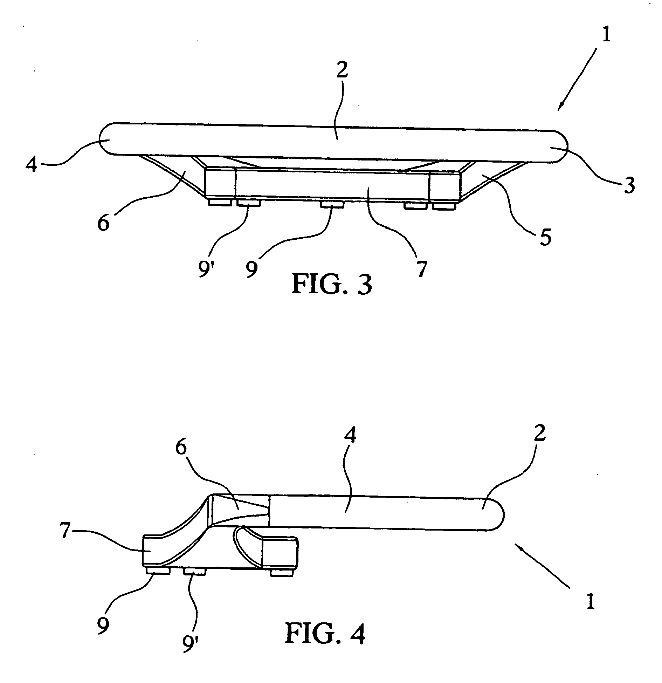

Figures 1 to 4 show an embodiment of the securing device 1 according to the present invention. In this embodiment the two handhold regions 3, 4 for the pillion passenger's hands are joined in a single structural member 2, in this case generally in the shape of an arc of circumference. Also in this embodiment it can be seen that connecting members 5, 6 project from each handhold region 3, 4, connecting with the part 7 for connection to the chassis of the motorbike 10. Said part 7 has a series of drilled holes 8, 8', etc. with an area for receiving the head of the screws for joining to the frame 14 of the upper cover 13 of the fuel tank, which is located on the upper surface of the upper chassis member 11, which in this case is constituted by a top fuel tank, which is in turn located between the handlebars 12 and the rider's seat 15. As can be seen in Figures 3 and 4, the drilled holes 8, 8', etc. have on the face intended to come into contact with the frame 14 of the upper cover 13, cylindrical flanges 9, 9', etc. having a shape mating with the holes for screwing on the frame 14 of the upper cover 13. In this way, the structural strength of the device 1 is reinforced, especially where it joins the upper cover 14 of the tank 11.

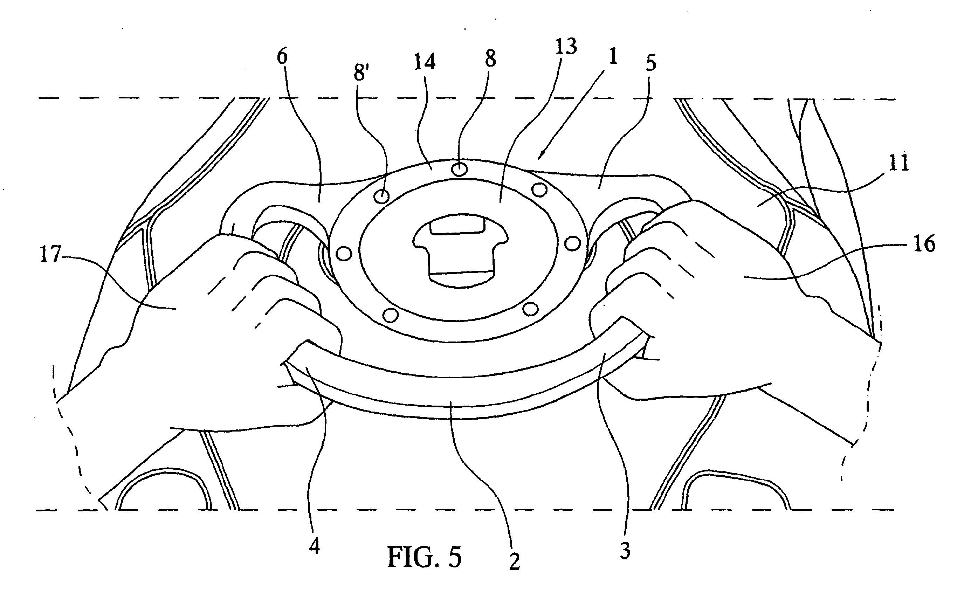

Figure 5 shows another different embodiment of the device according to the present invention in which it can be seen that the device 1 is incorporated in the upper cover 14 of the tank 11. In this case, the device is very similar to that shown in Figures 1 to 4, except that the connecting members 5 and 6 connect directly with the frame 14 of the upper cover 13, which frame performs the functions of the part 7 of the embodiment in Figures 1 to 4. In Figure 5 it can be seen that the handhold regions 3 and 4 are arranged obliquely with respect to each other, such that the hands 16 and 17 of the pillion passenger are arranged to form an angle having its vertex located between the device 1 and the actual pillion passenger.

This form of securing means has many advantages. Firstly it favours a position of the pillion passenger with the centre of gravity lower, so that the stability of same is increased. In addition, this arrangement renders the pillion passenger less susceptible to the forces of inertia. As a consequence, the pillion passenger adopts a more comfortable and stable position. These advantages are even further reinforced by the fact that the device 1 is placed in the transverse median plane of the motorbike, such that the handhold regions 3 and 4 are in proximity thereto.

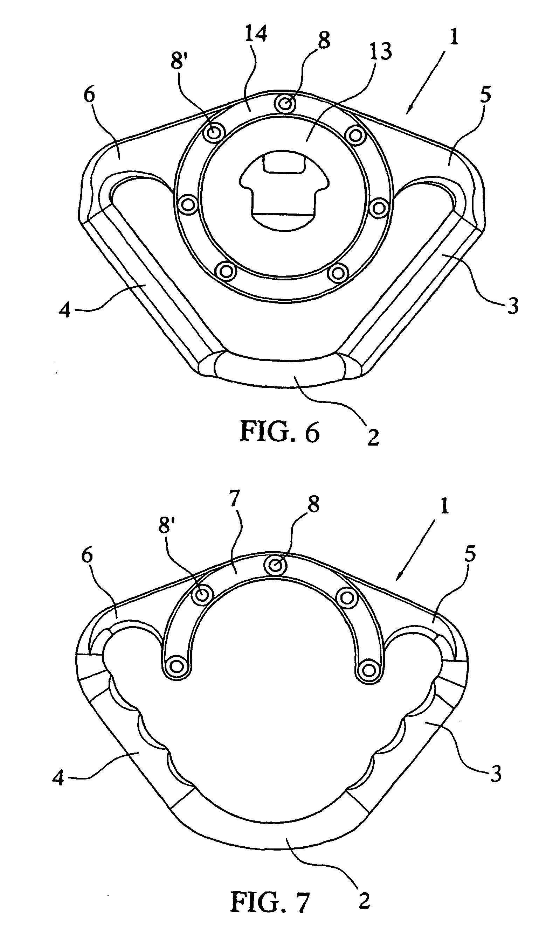

In Figure 6 can be seen in plan view a different embodiment of the device 1 according to the present invention, in which the handhold regions 3, 4 are incorporated in the upper cover 13 of the tank of a motorbike, in a similar manner to that shown in Figure 5. The embodiment shown in Figure 6 differs basically from that in Figure 5 in that the cross-section of the member 2 in the regions 3 and 4 has been modified in order to facilitate improved securing of the pillion passenger.

In Figure 7 can be seen a plan view of another different embodiment of the device 1 according to the present invention, in which the device is in the shape of an accessory that can be screwed on to the frame of the upper cover of a motorbike tank. The embodiment shown in Figure 7 differs from that shown in Figures 1 to 4 principally in that the handhold regions 3 and 4 have a known anatomical shape for receiving the fingers of the hands.

Obviously, the adoption of an ergonomic shape in the regions 3 and 4 favours the comfort and gripping ability of the pillion passenger.

The embodiments of Figures 5 and 6, which are incorporated in the upper cover of the motorbike tank may be especially indicated, for example, for the inclusion of the device 1 in the mass production of motorbikes, in an economical manner, since the only change required in the design and assembly stages for the motorbike consists in the substitution of the tank upper cover by the device according to the present invention. On the other hand, the embodiments in the shape of an accessory that can be screwed to the frame of the upper cover of the top tank of the motorbike, and which are shown in Figures 1 to 4 and 7, allow adaptation and commercialisation of the device according to the present invention for existing motorbikes, it being possible, for example, for the same accessory according to the present invention to be capable of being fitted to different models of motorbikes.

There are numerous variations of the examples shown here which should be regarded as being included within the present invention. Thus, for example, the handhold regions 3 and 4 may be separate and not joined by the member 2. Likewise, the device 1 may be in the form of two handhold regions 3, 4 integrally joined to the chassis member 11. This may be useful in the case where the upper cover 13 of the tank is not located on the upper surface of the chassis member 11, or when the chassis member 11 does not include a fuel tank. It would also be possible to join the device 1 to the chassis member 11 by other known means different from those indicated herein.

## Claims

1. A securing device (1) for the pillion passenger of a motorbike, the motorbike being of the type which comprises an upper chassis member between the handlebars and the rider's seat, said securing device comprising two handhold regions (3, 4) for the pillion passenger's hands, when in use, on the upper surface of the aforesaid chassis member, **characterized in that** the handhold regions (3, 4) are arranged substantially obliquely such that the pillion passenger's hands, when holding the device, form an angle having its vertex between the device and the pillion passenger's body.

2. A securing device for the pillion passenger of a motorbike, according to claim 1, **characterized in that** the handhold regions (3, 4), are arranged one on each side of the notional transverse median plane of the motorbike and in proximity thereto.

3. A securing device for the pillion passenger of a motorbike, according to any one of claims 1 to 2, **characterized in that** the handhold regions (3, 4) are ergonomically adapted for receiving the pillion passenger's hands.

4. A securing device for the pillion passenger of a motorbike, according to any one of claims 1 to 3, **characterized in that** the device is placed substantially horizontally on the motorbike.

5. A securing device for the pillion passenger of a motorbike, according to any one of claims 1 to 4, **characterized in that** both handhold regions have at least one member for connection to a structural member of the motorbike.

6. A securing device for the pillion passenger of a motorbike, according to any one of claims 1 to 5, **characterized in that** both connecting members are incorporated in the upper cover of the motorbike tank.

7. A securing device for the pillion passenger of a motorbike, according to any one of claims 1 to 6, **characterized in that** the connecting regions are incorporated in the upper cover in the region of the frame of the upper cover.

8. A securing device for the pillion passenger of a motorbike, according to any one of claims 1 to 5, **characterized in that** the connecting regions join one another in a member provided with drilled holes for its placement on the tank upper cover.

9. A securing device for the pillion passenger of a motorbike, according to claim 8, **characterized in that** the region for placement on the tank upper cover is generally in the shape of an arc of circumference.

10. A securing device for the pillion passenger of a motorbike, according to claim 8 or claim 9, **characterized in that** the drilled holes in the part for placement on the tank upper cover have a region for seating the heads of screws.

11. A securing device for the pillion passenger of a motorbike, according to any one of claims 8 to 10, **characterized in that** the drilled holes of the part for placement on the tank upper cover have in the region of contact with the frame of the tank upper cover of the motorbike a cylindrical flange having a shape mating with the holes for screwing on the tank upper cover.

12. A motocycle comprising a security device according to claim 1 and an upper chassis member between the handlebars and the rider's seat, **characterized in that** the handhold regions of said security device are incorporated in the aforesaid upper chassis member of the motorbike.

## Patentansprüche

1. Sicherungsvorrichtung (1) für den Soziusfahrer eines Motorrades, wobei das Motorrad von dem Typ ist, der ein oberes Fahrgestellelement zwischen der Lenkstange und dem Fahrersitz umfasst, wobei die Sicherungsvorrichtung zwei Haltegriffbereiche (3, 4) für die Hände des Soziusfahrers, wenn im Gebrauch, an der Oberseite des oben genannten Fahrgestellelements umfasst, **dadurch gekennzeichnet, dass** die Haltegriffbereiche (3, 4) im Wesentlichen schräg angeordnet sind, so dass die Hände des Soziusfahrers, wenn sie die Vorrichtung halten, einen Winkel bilden, der seinen Scheitelpunkt zwischen der Vorrichtung und dem Körper des Soziusfahrers besitzt.

2. Sicherungsvorrichtung für den Soziusfahrer eines Motorrades nach Anspruch 1, **dadurch gekennzeichnet, dass** je einer der Haltegriffbereiche (3, 4) auf jeder Seite der gedachten quer verlaufenden mittleren Ebene des Motorrades und in deren Nähe angeordnet ist.

3. Sicherungsvorrichtung für den Soziusfahrer eines Motorrades nach einem der Ansprüche 1 bis 2, **dadurch gekennzeichnet, dass** die Haltegriffbereiche (3, 4) ergonomisch zum Aufnehmen der Hände des Soziusfahrers ausgelegt sind.

4. Sicherungsvorrichtung für den Soziusfahrer eines Motorrades nach einem der Ansprüche 1 bis 3, **dadurch gekennzeichnet, dass** die Vorrichtung im Wesentlichen horizontal auf dem Motorrad untergebracht ist.

5. Sicherungsvorrichtung für den Soziusfahrer eines Motorrades nach einem der Ansprüche 1 bis 4, **dadurch gekennzeichnet, dass** beide Haltegriffbereiche mindestens ein Element für die Verbindung mit einem Strukturelement des Motorrades besitzen.

6. Sicherungsvorrichtung für den Soziusfahrer eines Motorrades nach einem der Ansprüche 1 bis 5, **dadurch gekennzeichnet, dass** beide Verbindungselemente in den oberen Deckel des Motorradtanks eingebaut sind.

7. Sicherungsvorrichtung für den Soziusfahrer eines Motorrades nach einem der Ansprüche 1 bis 6, **dadurch gekennzeichnet, dass** die Verbindungsbereiche in den oberen Deckel im Bereich des Rahmens des oberen Deckels eingebaut sind.

8. Sicherungsvorrichtung für den Soziusfahrer eines Motorrades nach einem der Ansprüche 1 bis 5, **dadurch gekennzeichnet, dass** die Verbindungsbereiche in einem weiteren Element, das mit Bohrlöchern für seine Unterbringung auf dem oberen Deckel des Tanks ausgestattet ist, zusammengefügt sind.

9. Sicherungsvorrichtung für den Soziusfahrer eines Motorrades nach Anspruch 8, **dadurch gekennzeichnet, dass** der Bereich für die Unterbringung auf dem oberen Deckel des Tanks im Allgemeinen die Form eines Umfangsbogens hat.

10. Sicherungsvorrichtung für den Soziusfahrer eines Motorrades nach Anspruch 8 oder Anspruch 9, **dadurch gekennzeichnet, dass** die Bohrlöcher in dem Teil für die Unterbringung auf dem oberen Deckel des Tanks einen Bereich für die Aufnahme der Schraubenköpfe besitzen.

11. Sicherungsvorrichtung für den Soziusfahrer eines Motorrades nach einem der Ansprüche 8 bis 10, **dadurch gekennzeichnet, dass** die Bohrlöcher des Teils für die Unterbringung auf dem oberen Deckel des Tanks einen zylinderförmigen Flansch, der eine Form aufweist, die mit den Löchern für das Schrauben auf dem oberen Deckel des Tanks in Eingriff ist, in dem Bereich des Kontakts mit dem Rahmen des oberen Deckels des Tanks besitzen.

12. Motorrad, das eine Sicherungsvorrichtung nach Anspruch 1 und ein oberes Fahrgestellelement zwischen der Lenkstange und dem Fahrersitz umfasst, **dadurch gekennzeichnet, dass** die Haltegriffbereiche der Sicherungsvorrichtung in das oben genannte obere Fahrgestellelement des Motorrades eingebaut sind.

## Revendications

1. Dispositif auxiliaire de sécurité (1) pour passagers de motocyclette, la motocyclette étant du type qui comprend un élément de châssis supérieur entre le guidon et le siège du conducteur, ledit dispositif auxiliaire de sécurité comprenant deux régions de poignée (3, 4) pour les mains des passagers, lorsqu'il est en utilisation, sur la surface supérieure de l'élément de châssis susmentionné, **caractérisé en ce que** les régions de poignée (3, 4) sont disposées sensiblement obliquement de sorte que les mains des passagers, lorsqu'elles tiennent le dispositif, forment un angle dont le sommet est compris entre le dispositif et le corps des passagers.

2. Dispositif auxiliaire de sécurité pour passagers de motocyclette selon la revendication 1, **caractérisé en ce que** les régions de poignée (3, 4) sont chacune disposées de chaque côté du plan médian transversal imaginaire de la motocyclette et à proximité de celui-ci.

3. Dispositif auxiliaire de sécurité pour passagers de motocyclette selon l'une quelconque des revendications 1 à 2, **caractérisé en ce que** les régions de poignée (3, 4) sont adaptées ergonomiquement à la réception des mains des passagers.

4. Dispositif auxiliaire de sécurité pour passagers de motocyclette selon l'une quelconque des revendications 1 à 3, **caractérisé en ce que** le dispositif est placé sensiblement horizontalement sur la motocyclette.

5. Dispositif auxiliaire de sécurité pour passagers de motocyclette, selon l'une quelconque des revendications 1 à 4, **caractérisé en ce que** les deux régions de poignée présentent au moins un élément destiné à la liaison à un élément structurel de la motocyclette.

6. Dispositif auxiliaire de sécurité pour passagers de motocyclette selon l'une quelconque des revendications 1 à 5, **caractérisé en ce que** les deux éléments de liaison sont incorporés dans le capot supérieur du réservoir de la motocyclette.

7. Dispositif auxiliaire de sécurité pour passagers de motocyclette selon l'une quelconque des revendications 1 à 6, **caractérisé en ce que** les régions de liaison sont incorporées dans le capot supérieur dans la région du cadre de ce dernier.

8. Dispositif auxiliaire de sécurité pour passagers de motocyclette selon l'une quelconque des revendications 1 à 5, **caractérisé en ce que** les régions de liaison se rejoignent dans un élément doté de trous percés pour son placement sur le capot supérieur du réservoir.

9. Dispositif auxiliaire de sécurité pour passagers de motocyclette selon la revendication 8, **caractérisé en ce que** la circonférence de la région pour le placement sur le capot supérieur du réservoir est généralement en forme d'arc.

10. Dispositif auxiliaire de sécurité pour passagers de motocyclette selon la revendication 8 ou 9, **caractérisé en ce que** les trous percés dans la partie pour le placement sur le capot supérieur du réservoir présentent une région pour le logement des têtes de vis.

11. Dispositif auxiliaire de sécurité pour passagers de motocyclette selon l'une quelconque des revendications 8 à 10, **caractérisé en ce que** les trous percés de la partie pour le placement sur le capot supérieur du réservoir présentent dans la région de contact avec le cadre du capot supérieur du réservoir de la motocyclette une bride cylindrique dotée d'une forme appariée aux trous pour le vissage sur le capot supérieur du réservoir.

12. Motocyclette comprenant un dispositif auxiliaire de sécurité selon la revendication 1 et un élément de châssis supérieur entre le guidon et le siège du conducteur, **caractérisée en ce que** les régions de poignée dudit dispositif auxiliaire de sécurité sont incorporées dans l'élément de châssis supérieur susmentionné de la motocyclette.
